# EUROPEAN PATENT APPLICATION

(11) **EP 4 570 829 A1**
(43) Date of publication of application: **18.06.2025**
(21) Application number: 23307194.3
(22) Date of filing: 13.12.2023
(51) Int. Cl.: C08F 14/22, C08F 293/00, C08J 5/18, C08J 5/22, C09D 127/16, C09D 153/00

(54) **SYNTHESIS OF SURFACTANT-FREE POLY(VINYLIDENE FLUORIDE) LATEXES VIA RAFT EMULSION POLYMERIZATION**

(71) Applicant: ARKEMA FRANCE, 92800 Puteaux (FR); Université Claude Bernard Lyon 1 (UCBL), 69100 Villeurbanne (FR); École Superieure de Chimie, Physique, Electronique De Lyon - CPE Lyon, 69616 Vilerbanne Cedex (FR); Centre National de la Recherche Scientifique, 75016 Paris (FR)
(72) Inventor: EID, Nadim, Pierre-Benite (FR); DEVISME, Samuel, Colombes (FR); BONNET, Anthony, Colombes (FR); FEVRIER, Thibaut, Colombes (FR); LANSALOT, Muriel, Genas (FR); D'AGOSTO, Franck, Genas (FR)
(74) Representative: Arkema Patent

(57) **Abstract**

The present invention relates to a process for producing a stable PVDF latex by emulsion polymerization in the absence of fluorinated surfactant, stabilized by a hydrophilic macromolecular reversible addition-fragmentation chain transfer (RAFT) agent.

## Description

### FIELD OF THE INVENTION

The present invention relates to a process for producing a stable PVDF latex by emulsion polymerization in the absence of fluorinated surfactant, stabilized by a hydrophilic macromolecular reversible addition-fragmentation chain transfer (RAFT) agent.

### TECHNICAL BACKGROUND

Poly(vinylidene fluoride) (PVDF) is a fluoropolymer valued for its excellent mechanical and thermal properties, in addition to its outstanding chemical inertness. It has been used in high performance applications like lithium-ion batteries, coatings or water treatment. PVDF is synthesized *via* aqueous free-radical emulsion or suspension polymerization of vinylidene fluoride (VDF). As the VDF monomer is either a gas or a supercritical fluid depending on the polymerization process, VDF emulsion polymerization mechanism is more complex than most emulsion polymerization processes. However, the global mechanism of VDF emulsion polymerization obeys to standard emulsion polymerization process, and the recipe includes water, VDF, a surfactant, a water-soluble initiator and optionally some additives (chain transfer agent, buffer, anti-fouling agent). The polymerization takes place in a high-pressure reactor, where VDF is initially present in both the gas and aqueous phases, and in the PVDF particles formed during the polymerization.

To achieve a stable dispersion of PVDF particles and good polymer properties, a suitable surfactant must be used. Thus, different types of surfactants/stabilization techniques have been used industrially and/or depicted in the literature for VDF emulsion polymerization, such as molecular fluorinated surfactants, molecular non-fluorinated surfactants, or "surfactant-free" techniques.

The use of polymeric stabilizer is well-known in emulsion and dispersion polymerization. Examples of VDF emulsion polymerization mediated by non-reactive polymeric surfactants have been described in several patents.

Document US 8697822 teaches the use of polymeric non-fluorinated surfactants for the polymerization of fluoromonomers. VDF is polymerized in the presence of a commercial hydrophilic poly(acrylic acid), leading to the obtainment of stable latex with solids contents up to 32.2 %, and no indication is given on the particle size.

US 8080621 relates to the use of polymeric stabilizers containing blocks of poly(ethylene glycol), polypropylene glycol) and/or poly(tetramethylene glycol) for emulsion copolymerization of VDF and HFP (hexafluoropropylene). US 2011/0034632 relates to the use of polycaprolactone as polymeric stabilizer for VDF emulsion polymerization.

Moreover, the particular use of block copolymers as stabilizers is well-known in emulsion and dispersion polymerization. Using for instance Polymerization-Induced Self-Assembly (PISA)-related process, water-soluble macromolecular chain transfer agents (i.e., water soluble chains carrying a reactive chain end and able to mediate a controlled radical polymerization-CRP) are used to mediate the polymerization of a hydrophobic monomer in water by chain-extension of the hydrophilic block leading to the formation of amphiphilic block copolymers *in situ.* When the hydrophobic block reaches a certain molar mass, the resulting block copolymers self-assemble into particles or act as stabilizer for the particles that forms besides. In the end, the hydrophilic block confers stability to the particles without using surfactants.

Surfactant-free emulsion polymerization of VDF mediated by a poly(ethylene glycol)-based hydrophilic macromolecular chain transfer agent (macroRAFT) has previously been described, based on the RAFT technique, for example in document WO 2019/063445. In this case, the hydrophilic PEG block carries a xanthate chain end involved in the polymerization of VDF. Self-stabilized PVDF particles can be obtained without adding surfactant, with a particle size significantly smaller with PEG-xanthate than with commercial non-modified PEG-OH, thus showing the beneficial use of a reactive macromolecule.

Document WO 2023/110696 discloses emulsion polymerization of VDF in the presence of amphiphilic block copolymers obtained by RAFT polymerization. In this case, the amphiphilic block copolymer is based on:
- a hydrophilic sequence -[A]ₙ- of hydrophilic repeating units A where n is an integer from 2 to 300, and
- a hydrophobic sequence -[B]ₘ- of hydrophobic repeating units B where m is an integer from 2 to 300.
These block copolymers self-assemble in water due to their amphiphilic properties. Employed in the emulsion polymerization of VDF, the resulting self-assembled block copolymers contribute to the formation and the stabilization of PVDF particles without adding other stabilizers.

It has now been found that polymeric RAFT agents having a structure similar to the polymeric RAFT chains used in WO 2023/110696 but exempt of the -[B]ₘ- hydrophobic block (m = 0) can be successfully used to mediate VDF emulsion polymerization without adding surfactant, especially without adding any low molar mass fluorosurfactant. The process of the invention also allows to produce small particle size emulsion permitting the PVDF latex to be stable during storage and enabling film formation.

The hydrophilic macroRAFTs used in the present invention, synthesized and used for the first time to mediate emulsion polymerization of VDF, are based on a hydrophilic compound chosen from: acrylic acid, methacrylic acid, styrene sulfonate and mixtures thereof.

### SUMMARY OF THE INVENTION

According to a first aspect, the invention concerns a process for producing a stable vinylidene fluoride polymer latex by emulsion polymerization in the absence of fluorinated surfactant, said process comprising the steps of:
a. providing a hydrophilic macroRAFT by aqueous RAFT (co)polymerization of a hydrophilic compound chosen from: acrylic acid, methacrylic acid, styrene sulfonate and mixtures thereof, forming a first hydrophilic block carrying a reactive chain end,
b. synthesis of a poly(vinylidene fluoride) polymer by aqueous emulsion, alone or in combination with at least one other ethylenically unsaturated comonomer, in the presence of initiator, the hydrophilic macroRAFT obtained in step a and optionally of a chain transfer agent and/or an antifoulant.

The invention also relates to an aqueous dispersion comprising polymer particles composed of VDF monomer, alone or in combination with at least one other ethylenically unsaturated comonomer, said PVDF particles having an average particle size from 20 to 300 nm, said PVDF dispersion having a solid content of 1 to 60, preferably of 15 to 45 weight percent, and being free of low molar mass fluorinated surfactant.

The invention also relates to the applications of the aqueous PVDF dispersion for the preparation of membranes, coatings and films.

The present invention makes it possible to overcome the disadvantages of the state of the art. It more particularly provides a process for the synthesis of a fluorosurfactant-free latex using non fluorinated polymeric stabilizer. The emulsion polymerization of VDF is mediated by specific hydrophilic polymer chains made by RAFT (macroRAFT), used in low concentration. The PVDF latexes are formed of stable particles (less than 500 nm) and have a high solids content (up to 46 wt %).

The macroRAFT agent, composed of a hydrophilic block, functions as a precursor of stabilizer for fluoromonomer polymerization. The macroRAFT participates in the polymerization, providing *in situ* latex stability.

### DESCRIPTION OF EMBODIMENTS OF THE INVENTION

The invention is now described in detail.

The present invention describes a way to prepare poly(vinylidene fluoride) latexes, using a hydrophilic macroRAFT in emulsion polymerization using a hydrophilic macroRAFT without adding any fluorosurfactant. The hydrophilic macroRAFT contributes to particle stabilization.

According to one embodiment, this process requires the synthesis by reversible-deactivation radical polymerizations (RDRP) of hydrophilic polymer chains in water, that can play the role of a macromolecular stabilizer.

According to a first aspect, the invention provides a process for producing a stable PVDF latex by emulsion polymerization in the absence of low molar mass fluorinated surfactant.

In the first step (step a), a hydrophilic macroRAFT is synthesized by aqueous RAFT (co)polymerization of a hydrophilic compound chosen from: acrylic acid (AA), methacrylic acid (MAA), styrene sulfonate (SS) and mixtures thereof, forming a first hydrophilic block carrying a reactive chain end.

According to an embodiment, the hydrophilic RAFT agents have on the following structure: 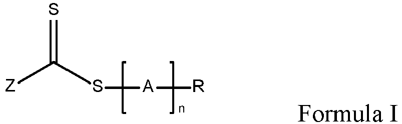 where:
- Z and R are organic groups determining the nature of the RAFT agent.
- [A]ₙ- is a hydrophilic block.

- [A]n- represents a sequence of repeating units -A- derived from at least one ethylenically unsaturated monomer having hydrophilic character [monomer (A)], whereas n is an integer from 2 to 300, preferably from 2 to 200, more preferably from 5 to 120.
- Z is selected from the group consisting of optionally substituted alkoxy, optionally substituted aryloxy, optionally substituted heterocyclyl, optionally substituted alkylthio, optionally substituted arylalkylthio, dialkoxy- or diaryloxy- phosphinyl [-P(=O)(OR⁴)₂], dialkyl- or diaryl- phosphinyl [- P(=O)R⁴₂], where R⁴ is selected from the group consisting of optionally substituted C1-C18 alkyl, optionally substituted C2-C18 alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; and wherein Z may be additionally selected from the group consisting of optionally substituted alkyl, preferably optionally substituted C1-C20 alkyl, optionally substituted aryl, and optionally substituted arylalkyl. Optional substituents for R⁴ and Z groups include epoxy, hydroxy, alkoxy, acyl, acyloxy, carboxy (and its salts), sulfonic acid (and its salts), alkoxyor aryloxy- carbonyl, isocyanato, cyano, silyl, halo, and dialkylamino.
- R is an organic group optionally substituted with one or more hydrophilic groups; group - (H)n - represents at least one polymer chain formed by any mechanism; and Z is selected from the group consisting of optionally substituted alkoxy, optionally substituted aryloxy, optionally substituted heterocyclyl, optionally substituted alkylthio, optionally substituted arylalkylthio, dialkoxy- o diaryloxy- phosphinyl [-P(=O)(OR )2], dialkyl- or diaryl-phosphinyl [-P(=O)R 2], where R4 is selected from the group consisting of optionally substituted C -C alkyl, optionally substituted C2-C18 alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; and wherein Z may be additionally selected from the group consisting of optionally substituted alkyl, preferably optionally substituted C 1-C20 alkyl, optionally substituted aryl, and optionally substituted arylalkyl. Optional substituents for R4 and Z groups include epoxy, hydroxy, alkoxy, acyl, acyloxy, carboxy (and its salts), sulfonic acid (and its salts), alkoxyor aryloxy- carbonyl, isocyanato, cyano, silyl, halo, and dialkylamino.

Due to the absence of a hydrophobic block, these polymeric RAFT chains are hydrophilic and do not self-assemble in water as proved by dynamic light scattering (DLS) analyses.

It has been observed that by selecting the appropriate Z and R groups and the appropriate -[A]n- block, such hydrophilic macroRAFTs are able to provide a very good stabilization to PVDF particles by assisting VDF polymerization. The polymeric RAFT agent used to ensure the stabilization of particles is hydrosoluble, making the process of polymerization of VDF more reliable.

The protocol for obtaining the hydrophilic macroRAFT involves a straightforward one-step synthesis described in the literature (I. Chaduc, A. Crépet, O. Boyron, B. Charleux, F. D'Agosto, M. Lansalot, Macromolecules 2013, 46, 6013-6023).

In a second step (step b), the resulting hydrophilic macroRAFT is then used in the emulsion polymerization of VDF.

According to an embodiment, the weight ratio initiator/macroRAFT in step b ranges from 0.1 to 10, preferably from 0.5 to 6.

The term "vinylidene fluoride polymer" used herein (or "PVDF") includes both normally solid, homopolymers and copolymers within its meaning. Such copolymers include those containing at least 50 mole percent of vinylidene fluoride copolymerized with at least one comonomer selected from the group consisting of tetrafluoroethylene, trifluoroethylene, chlorotrifluoroethylene, hexafluoropropene, vinyl fluoride, pentafluoropropene, perfluoromethyl vinyl ether, perfluoropropyl vinyl ether and any other monomer that would readily copolymerize with vinylidene fluoride. Terpolymers of vinylidene fluoride, hexafluoropropene and tetrafluoroethylene and terpolymers of vinylidene fluoride, trifluoroethylene and tetrafluoroethylene are also representatives of the class of vinylidene fluoride copolymers that can be prepared by the process embodied herein.

The unfluorinated monomers useful in the aqueous-based polymerization of the invention are ethylenically unsaturated monomers chosen from: (meth)acrylic acid and (meth)acrylic esters such as alkyl(meth)acrylates, vinyl esters such as vinyl acetate, vinyl propionate, vinyl butyrate, vinyl benzoate, maleic esters such as dimethyl maleate, diethyl maleate, di-n-propyl maleate, diisopropyl maleate, di-2-methoxyethyl maleate, fumaric esters such as dimethyl fumarate, diethyl fumarate, di-n-propyl fumarate, diisopropyl fumarate, styrene, vinyltoluene, alpha-methylstyrene and acrylonitrile, anhydrides, vinyl esters, alpha-olefins, substituted or unsubstituted mono and dialkyl esters of unsaturated dicarboxylic acids, vinyl aromatics, and cyclic monomers.

Although the process of the invention will be generally illustrated with respect to the polymerization of vinylidene fluoride homopolymer, one of skill in the art will recognize that analogous polymerization techniques can be applied to the preparation of copolymers of vinylidene fluoride with fluorinated or unfluorinated co-reactive monomers.

The polymers are conveniently made by an emulsion polymerization process, but could also be synthesized by a suspension, solution, or supercritical CO₂ process using non-fluorinated macroRAFT agents.

In the emulsion polymerization process of step b, the reactor used in step a is further charged with deionized water, and optionally paraffin antifoulant and/or a chain-transfer agent.

The mixture is stirred and deoxygenated. A predetermined amount of chain transfer agent, CTA, is then introduced into the reactor, though no CTA might be used in the present process. The reactor temperature is raised to the desired level and vinylidene fluoride fed into the reactor. Once the initial charge of vinylidene fluoride is introduced and the pressure in the reactor has reached the desired level, at least one radical initiator is added to start and maintain the polymerization reaction. The vinylidene fluoride is continuously fed optionally along with additional initiator to maintain the desired pressure. The temperature of the reaction can vary depending on the characteristics of the initiator used and one of skill in the art will know how to do so. Typically, the reactor temperature will be from 30° to 120°C, preferably from 60° to 110°C. The polymerization pressure may vary, typically within the range of from 200 to 10000 kPa. Once the desired amount of polymer conversion has been reached in the reactor, the monomer feed will be stopped, but initiator is optionally added to consume residual monomer. Residual gases (containing unreacted monomers) are then vented, and the latex recovered from the reactor. The polymer may then be isolated from the latex by standard methods, such as freeze thaw, spray-dry, freeze-dry, or high shear coagulation separation.

The term "initiator" and the expressions "radical initiator" and "free radical initiator" refer to a chemical that is capable of providing a source of free radicals, either induced spontaneously, or by exposure to heat or light. Examples of initiators include peroxides, peroxydicarbonates and azo compounds. The term expression also includes redox systems useful in providing a source of free radicals.

The radical initiator is added to the reaction mixture in an amount sufficient to initiate and maintain the polymerization reaction at a desired reaction rate. The order of addition may vary according to the desired process and latex emulsion characteristics.

The radical initiator may comprise a persulfate salt, such as sodium persulfate, potassium persulfate, or ammonium persulfate. The amount of persulfate salt added to the reaction mixture (based upon the total weight of monomer added to the reaction mixture) is from 0.005 to 3.0 weight percent.

The radical initiator may comprise an organic peroxide such as an alkyl, dialkyl, or diacyl peroxide, peroxydicarbonates, and peroxy esters in an amount from 0.5 to 2.5 weight percent on total monomer.

Chain-transfer agents are optionally added to the polymerization to regulate the molecular weight of the product. They may be added to a polymerization in a single portion at the beginning of the reaction, or incrementally or continuously throughout the reaction. The amount and mode of addition of chain-transfer agent depend on the activity of the particular chain-transfer agent employed, and on the desired molecular weight of the polymer product. When added, the amount of chain-transfer is preferably from 0.05 to 5 weight percent, more preferably from 0.1 to 2 weight percent based on the total weight of monomer added to the reaction mixture.

Examples of chain transfer agents useful in the present invention include, but are not limited to oxygenated compounds such as alcohols, carbonates, ketones, esters, and ethers; halocarbons and hydrohalocarbons, such as chlorocarbons, hydrochlorocarbons, chlorofluorocarbons and hydrochlorofluorocarbons; ethane and propane.

The optional addition of a paraffin wax or hydrocarbon oil to the reaction serves as an antifouling agent to minimize or prevent polymer adhesions to the reactor components. Any long chain saturated hydrocarbon wax or oil can perform this function. The amount of oil or wax added to the reactor is an amount which serves to minimize the formation of polymer adhesions to the reactor components. The amount is generally proportional to the interior surface area of the reactor and may vary from 1 to 40 mg per square centimeter of reactor interior surface area. The amount of paraffin wax or hydrocarbon oil is preferably 5 mg/cm² of the reactor interior surface area.

According to a second aspect, the invention relates to aqueous stable PVDF dispersion comprising PVDF particles, residues of initiator, alone or in combination with at least one other ethylenically unsaturated comonomer, said PVDF particles having an average particle size from 20 to 500 nm, as measured by dynamic light scattering, said PVDF dispersion having a solid content of 1 to 60, preferably of 15 to 45 weight percent (as measured by gravimetry) and being free of low molar mass fluorinated surfactant., the amount of PVDF being determined from the solids content minus all the other species including initiator, hydrophilic macroRAFT and buffer.

The PVDF dispersions have good latex stability and shelf-life, and a good quality of film formation. Additionally, the particle size of dispersion being small, it is advantageous for many direct applications of fluoropolymer in a latex form, such as manufacture of membranes, coatings and films.

### EXAMPLES

The following examples illustrate the invention without limiting it.

### 1) Reagents

The following reagents were used in the examples:
Vinylidene fluoride (VDF) was supplied by Arkema (Pierre-Benite, France). Potassium persulfate (KPS, Aldrich, 99% ), sodium acetate (Aldrich, 99%), poly(ethylene glycol) methyl ether (PEG-OH, 2000 g mol-1, Aldrich), sodium hydrogen carbonate (NaHCO3, Aldrich, > 99%), acrylic acid (AA, Aldrich, 99%), methacrylic acid (MAA, Acros Organics, 99.5 %), sodium 4-styrenesulfonate (SSNa, Aldrich, > 99.5%), 4,4'-Azobis(4-cyanopentanoic acid) (ACPA, Aldrich, >98 %), 1,3,5-trioxane (Aldrich, > 99%), poly(acrylic acid) (Thermo scientific, 63 wt% solution in water, approx. Mw = 2000 g mol-1), tetrahydrofuran (THF, Fisher, HPLC grade), 2-propanol (Aldrich, 99.9%, HPLC grade), dilauroyl peroxide (Acros Organics, 99%), diethyl ether (Aldrich, 99 %) and dimethyl sulfoxide (DMSO, Fischer, HPLC grade) were used as received.
4-Cyano-4- thiothiopropylsulfanylpentanoic acid (CTPPA) was obtained by reaction of ACPA with bis(propylsulfanylthiocarbonyl) disulfide as described in Boursier, I. Chaduc, J. Rieger, F. D'Agosto, M. Lansalot, B. Charleux, Polym. Chem. 2011, 2, 355-362.
O-ethyl-S-(1-ethoxycarbonyl) ethyl dithiocarbonate was obtained by reaction of O-ethyl xanthic acid with ethyl 2-bromopropionate according to the protocol described in M. Destarac, C. Brochon, J.-M. Catala, A. Wilczewska, S. Z. Zard, Macromolecular Chemistry and Physics 2002, 203, 2281-2289.
Water was deionized before use (Purelab Classic UV, Elga LabWater).

### 2) Characterization techniques

Nuclear magnetic resonance (NMR) was used to follow the conversion of the monomers as a function of time during the synthesis of the different macroRAFTs, and to determine the microstructure of the obtained PVDF latex. NMR spectra were recorded on a Bruker Avance 400 spectrometer (400 MHz for ¹H and 376 MHz for ¹⁹F) at 25°C using DMSO-d₆ or D₂O as solvents. The samples were diluted in the solvent of analysis at a concentration of 30 mg mL⁻¹. NMR spectra were recorded with a 5 mm BBFO + probe with a z-gradient coil.

Size exclusion chromatography (SEC) in THF was used to determine the molar masses and the molar mass distributions of the obtained macroRAFTs. SEC analyses were performed using a Viscotek system (Malvern Instruments) equipped with a guard column and three Polymer Standard Service columns (SDVB, 5 µm, 300 × 7.5 mm) and including a differential refractive index detector (RI), a four-capillary differential viscometer and UV detector. The measurements were done at 35°C with a flow rate of 1 mL min⁻¹. Sample concentration was between 3 and 5 mg L-1 after filtration through 0.45 µm pore membranes. The number-average and weight-avera ge molar masses (Mn and Mw, respectively) and the dispersity (D = Mw/Mn) were obtained using a calibration curve based on polystyrene standards from 470 to 270 000 g mol⁻¹. The Omnisec software was used for data acquisition and analysis.

SEC in DMSO was used to follow the evolution of the molar masses and molar mass distibutions as a function of the conversion during the synthesis of the macroRAFTs, and to determine the molar masses of PVDF. SEC analyses were performed using a Agilent 1260 Infinity system equipped with three porous columns - one column of 30 Å and two columns of 1000 Å of polyester copolymer (Gram columns, PSS) and including a differential refractive index detector (RI), and a UV detector. The mobile phase consists in a mixture of DMSO with sodium nitrate (NaNO₃, 0.01 mol L⁻¹) previously filtered, at a flow rate of 0.9 mL min⁻¹. To prepare the sample, the product to analyze was dissolved in the same mixture of DMSO and NaNO₃ than the mobile phase at a concentration of around 5 mg mL⁻¹. When the samples were completely dissolved, solutions were filtered through a 0.45 µm nylon membrane and injected. Mn, Mw and D were obtained using a calibration curve based on poly(methyl methacrylate) (PMMA) standards from 831 to 1430000 g mol⁻¹. The Agilent GPC/SEC solfware was used for data acquisition and analysis.

The solids content (SC) of the macroRAFT solutions and of the PVDF latexes were measured by gravimetric analysis The particle sizes of the latex were obtained by dynamic light scattering (DLS). The intensity-weighted mean diameter of the latex particles (Dz, nm, corresponding to the hydrodynamic particle diameter) and the dispersity factor (PdI) were measured at 25°C with an angle of 173° using a Zetasizer Nano Series (Nano ZS) from Malvern Instruments.

### Preparative Examples: synthesis of the macroRAFTs

### Preparative Example 1: synthesis of PAA-CTPPA

42 g of deionized water, 6 g of AA, 1.1 g of CTPPA, 0.1 g of ACPA and 1.3 g of trioxane (internal reference for NMR analysis) were introduced in a two-necked round-bottom flask equipped with a condenser. After deoxygenation by argon bubbling for 30 min, the flask was immersed in an oil bath thermostated at 70 °C and maintained at this temperature for 5 hours. The monomer conversion and the evolution of molar masses and molar mass distributions were obtained by regularly withdrawing samples during the reaction. The monomer conversion was followed by ¹H NMR in D₂O by the relative integration of the protons of trioxane and the vinylic protons of AA. At the end of the reaction, the mixture was then cooled down at room temperature. A yellowish liquid product was obtained corresponding to the PAA-CTPPA polymer dissolved in water. The solids content of the obtained product was measured by gravimetry (SC = 15.1 wt %). The number-average molar mass and dispersity were determined after methylation by SEC in THF (*M*ₙ = 1800 g mol⁻¹ and *Ð* = 1.10).

### Preparative Example 2: synthesis of PMAA-CTPPA

35 g of deionized water, 6 g of MAA, 0.9 g of CTPPA, 0.1 g of ACPA and 1.1 g of trioxane (internal reference for NMR analysis) were introduced in a two-necked round-bottom flask equipped with a condenser. After deoxygenation by argon bubbling for 30 min, the flask was immersed in an oil bath thermostated at 80 °C and maintained at this temperature for 4 hours. The prodecure to follow the monomer conversion and to measure the molar masses is the same as in Preparative example 1 but integrating the vinylic protons of MAA instead of the the vinylic protons of AA. The mixture was then cooled down at room temperature. An orange liquid product was obtained corresponding to the PMAA-CTPPA polymer dissolved in water. The solids content of the obtained product was measured by gravimetry (SC = 16.9 wt %). The number-average molar mass and dispersity were determined after methylation by SEC in THF (*M*ₙ= 2200 g mol⁻¹ and *Ð* = 1.08).

### Preparative Example 2': synthesis of PMAA-CTPPA

35 g of deionized water, 6 g of MAA, 0.44 g of CTPPA, 0.04 g of ACPA and 1.1 g of trioxane (internal reference for NMR analysis) were introduced in a two-necked round-bottom flask equipped with a condenser. After deoxygenation by argon bubbling for 30 min, the flask was immersed in an oil bath thermostated at 80 °C and maintained at this temperature for 4 hours. The procedure to follow the monomer conversion and to measure the molar masses is the same as in Preparative example 2. The mixture was then cooled down at room temperature. An orange liquid product was obtained corresponding to the PMAA-CTPPA polymer dissolved in water. The solids content of the obtained product was measured by gravimetry (SC = 16.0 wt %). The number-average molar mass and dispersity were determined after methylation by SEC in THF (*M*ₙ = 4100 g mol⁻¹ and *Ð* = 1.11).

### Preparative Example 3: synthesis of P(MAA-co-AA)-CTPPA (f⁰_{AA} = 0.5)

35 g of deionized water, 3 g of MAA, 2.5 g of AA, 0.9 g of CTPPA, 0.1 g of ACPA and 0.5 g of trioxane were introduced in a two-necked round-bottom flask equipped with a condenser. After deoxygenation by argon bubbling for 30 min, the flask was immersed in an oil bath thermostated at 80 °C and maintained at this temperature for 4 hours. The conversion of each monomer was followed by ¹H NMR in D₂O by the relative integration of the protons of trioxane and the vinylic protons of AA and MAA and the evolution of molar masses and molar mass distributions was followed by SEC. The mixture was then cooled down at room temperature. An orange liquid product was obtained corresponding to the P(MAA_{0.51}-*co-*AA_{0.49})-CTPPA polymer dissolved in water. The solids content of the obtained product was measured by gravimetry (SC = 16.9 wt %). The number-average molar mass and dispersity were determined after methylation by SEC in THF (*M*ₙ = 1950 g mol⁻¹ and *Ð* = 1.25).

### Preparative Example 4: synthesis of P(MAA-co-AA)-CTPPA (f⁰_{AA} = 0.25)

35 g of deionized water, 4.5 g of MAA, 1.3 g of AA, 0.9 g of CTPPA, 0.1 g of ACPA and 0.8 g of trioxane were introduced in a two-necked round-bottom flask equipped with a condenser. After deoxygenation by argon bubbling for 30 min, the flask was immersed in an oil bath thermostated at 80 °C and maintained at this temperature for 4 hours. The conversion of each monomer was followed by ¹H NMR in D₂O by the relative integration of the protons of trioxane and the vinylic protons of AA and MAA and the evolution of molar masses and molar mass distributions was followed by SEC. The mixture was then cooled down at room temperature. An orange liquid product was obtained corresponding to the P(MAA_{0.75}-*co-*AA_{0.25})-CTPPA polymer dissolved in water. The solids content of the obtained product was measured by gravimetry (SC = 16.3 wt %). The number- average molar mass and dispersity were determined after methylation by SEC in THF (*M*ₙ = 2100 g mol⁻¹ and *Ð* = 1.35).

### Preparative Example 5: synthesis of P(MAA-co-AA)-CTPPA (f⁰_{AA} = 0.75)

35 g of deionized water, 1.5 g of MAA, 3.8 g of AA, 0.9 g of CTPPA), 0.1 g of ACPA and 0.3 g of trioxane were introduced in a two-necked round-bottom flask equipped with a condenser. After deoxygenation by argon bubbling for 30 min, the flask was immersed in an oil bath thermostated at 80 °C and maintained at this temperature for 4 hours. The conversion of each monomer was followed by ¹H NMR in D₂O by the relative integration of the protons of trioxane and the vinylic protons of AA and MAA and the evolution of molar masses and molar mass distributions was followed by SEC. The mixture was then cooled down at room temperature. An orange liquid product was obtained corresponding to the P(MAA_{0.26}-*co-*AA_{0.74})-CTPPA polymer dissolved in water. The solids content of the obtained product was measured by gravimetry (SC = 16.4 wt %). The number- average molar mass and dispersity were determined after methylation by SEC in THF (*M*ₙ = 1800 g mol⁻¹ and *Ð* = 1.21).

### Preparative Example 6: synthesis of PSSNa-CTPPA

33 g of deionized water, 6 g of SSNa, 0.4 g of CTPPA, 0.04 g of ACPA, 0.5 g of trioxane and 0.04 g of sodium hydrogencarbonate (NaHCOs) were introduced in a two-necked round-bottom flask equipped with a condenser. After deoxygenation by argon bubbling for 30 min, the flask was immersed in an oil bath thermostated at 80 °C and maintained at this temperature for 4 hours. The procedure to follow the monomer conversion and to measure the molar masses is the same as in Preparative example 1 but integrating the vinylic protons of SSNa instead of the vinylic protons of AA. The mixture was then cooled down at room temperature. A yellowish liquid product was obtained corresponding to the PSSNa-CTPPA polymer dissolved in water. The solids content of the obtained product was measured by gravimetry (SC = 16.6 wt %). The number- average molar mass and dispersity were determined by SEC in DMSO (*M*ₙ = 4200 g mol⁻¹ and *Ð* = 1.05).

### Preparative Example 6': synthesis of PSSNa-CTPPA

33 g of deionized water, 6 g of SSNa, 0.3 g of CTPPA, 0.03 g of ACPA, 0.5 g of trioxane and 0.03 g of sodium hydrogencarbonate (NaHCOs) were introduced in a two-necked round-bottom flask equipped with a condenser. After deoxygenation by argon bubbling for 30 min, the flask was immersed in an oil bath thermostated at 80 °C and maintained at this temperature for 4 hours. The procedure to follow the monomer conversion and to measure the molar masses is the same as in Preparative example 6. The mixture was then cooled down at room temperature. A yellowish liquid product was obtained corresponding to the PSSNa-CTPPA polymer dissolved in water. The solids content of the obtained product was measured by gravimetry (SC = 16.4 wt %). The number- average molar mass and dispersity were determined by SEC in DMSO (*M*ₙ = 6100 g mol⁻¹ and *Ð* = 1.06).

### Preparative Example 7: synthesis of PAA-Xanthate

31 g of deionized water, 3 g of AA, 0.4 g of *O*-ethyl-*S*-(1-ethoxycarbonyl) ethyl dithiocarbonate, 0.1 g of ACPA, 6.2 g of 2-propanol and 0.6 g of trioxane were introduced in a two-necked round-bottom flask equipped with a condenser. After deoxygenation by argon bubbling for 30 min, the flask was immersed in an oil bath thermostated at 80 °C and maintained at this temperature for 4 hours. The procedure to follow the monomer conversion and to measure the molar masses is the same as in Preparative example 1. The mixture was then cooled down at room temperature. An uncolored liquid product was obtained corresponding to the PAA-X polymer dissolved in water. The solids content of the obtained product was measured by gravimetry (SC = 8.4 wt %). The number- average molar mass and dispersity were determined after methylation by SEC in THF (*M*ₙ = 2300 g mol⁻¹ and *Ð* = 1.10).

### Example 1-15: VDF emulsion polymerization in the presence of the different hydrophilic chains synthesized in Preparative examples 1-8

### Examples 1-2: VDF emulsion polymerization in the presence of PAA-CTPPA

Example 1: VDF emulsion polymerization was conducted in a 200 mL Parr autoclave equipped with a mechanical stirring system, inlet and outlet valves, a thermometer and a pressure sensor. A 80 mL solution of 0.16 g of KPS, 0.10 g of sodium acetate and 0.07 g (2.8 × 10⁻⁵ mol) of PAA-CTPPA synthesized in Preparative example 1 were introduced in the reactor. The medium was deoxygenated under argon for 30 min. VDF was introduced in the reactor under stirring (500 rpm) until the targeted pressure of 35 bar. Immediately after, the medium was heated at a set point temperature of 80 °C. The injection port stayed open until the end of the reaction, to add continuously VDF throughout the reaction (semi-batch mode). The reaction was stoped after 3 h 10 of reaction: the reactor was cooled down, the agitation speed was slowed down, unreacted monomer was progressively released, and the latex was finally collected.

Example 2 follows the same procedure as described in Example 1 but using a higher amount of PAA-CTPPA (5.3 × 10⁻⁵ mol).

### Examples 3-6: VDF emulsion polymerization in the presence of PMAA-CTPPA

Example 3 follows the same procedure as described in Example 1 but replacing PAA-CTPPA by PMAA-CTPPA synthesized in Preparative example 2 (same molar quantity, 2.8 × 10⁻⁵ mol).

Example 4 follows the same procedure as described in Example 3 but with a higher reaction time (3 h 45 instead of 3 h 10)

Example 5 follows the same procedure as described in Example 3 but using a higher amount of PMAA-CTPPA (5.3 × 10⁻⁵ mol).

Example 6 follows the same procedure as described in Example 3 but replacing PMAA-CTPPA synthesized in Preparative example 2 by PMAA-CTPPA synthesized in Preparative example 2' (same molar quantity, 2.8 × 10⁻⁵ mol).

### Example 7: VDF emulsion polymerization in the presence of P(MAA-co-AA)-CTPPA (f⁰_{AA} = 0.5)

Example 7 follows the same procedure as described in Example 5 but replacing PMAA-CTPPA by P(MAA-*co*-AA)-CTPPA (f⁰_{AA} = 0.5) synthesized in Preparative example 3 (same molar quantity, 5.3 × 10⁻⁵ mol).

### Example 8: VDF emulsion polymerization in the presence of P(MAA-co-AA)-CTPPA (f⁰_{AA} = 0.75)

Example 8 follows the same procedure as described in Example 7 but replacing P(MAA-*co-*AA)-CTPPA (f⁰_{AA} = 0.5) by P(MAA-*co*-AA)-CTPPA (f⁰_{AA} = 0.75) synthesized in Preparative example 5 (same molar quantity, 5.3 × 10⁻⁵ mol).

### Example 9: VDF emulsion polymerization in the presence of P(MAA-co-AA)-CTPPA (f⁰_{AA} = 0.25)

Example 9 follows the same procedure as described in Example 8 but replacing P(MAA-co-AA)-CTPPA (f⁰_{AA} = 0.75) by P(MAA-*co*-AA)-CTPPA (f⁰_{AA} = 0.25) synthesized in Preparative example 4 (same molar quantity, 5.3 × 10⁻⁵ mol).

Example 10-13: VDF emulsion polymerization in the presence of PSSNa-CTPPAExample 10 follows the same procedure as described in Example 1 but replacing PAA-CTPPA by PSSNa-CTPPA synthesized in Preparative example 6 (same molar quantity, 2.8 × 10⁻⁵ mol).

Example 11 follows the same procedure as described in Example 10 but using a higher amount of PSSNa-CTPPA (5.3 × 10⁻⁵ mol).

Example 12 follows the same procedure as described in Example 11 but with a higher reaction time (3 h 45 instead of 3 h 10)

Example 13 follows the same procedure as described in Example 11 but replacing PSSNa-CTPPA synthesized in Preparative example 6 by PSSNa-CTPPA synthesized in Preparative example 6' (same molar quantity, 5.3 × 10⁻⁵ mol).

### Example 14: VDF emulsion polymerization in the presence of PAA-X

Example 12 follows the same procedure as described in Example 2 but replacing PAA-CTPPA by PAA-X synthesized in Preparative example 7 (same molar quantity, 5.3 × 10⁻⁵ mol) and using a lower reaction time of 1 h.

**Table 1: characteristics of the latex obtained in the Examples 1-15**

| **Ex** | **Reaction time** | **Mol of stabilizer** | **Solids content (%)** | ***D*_{z}^{a} (nm)** | **PdI^{b}** | **Nₚ (10¹⁶ L^{- 1}_{water})** |
|---|---|---|---|---|---|---|
| 1 | 3 h 10 | 2.8 x 10⁻⁵ | coag | - | - | - |
| 2 | 3 h 10 | 5.3 x 10⁻⁵ | 29.7 | 199 | 0.01 | 5.6 |
| 3 | 3 h 10 | 2.8 x 10⁻⁵ | 38.0 | 209 | 0.02 | 7.2 |
| 4 | 3 h 45 | 2.8 x 10⁻⁵ | 46.1 | 236 | 0.03 | 6.9 |
| 5 | 3 h 10 | 5.3 x 10⁻⁵ | 27.0 | 159 | 0.01 | 9.7 |
| 6 | 3 h 10 | 2.8 x 10⁻⁵ | 30.7 | 183 | 0.01 | 7.6 |
| 7 | 3 h 10 | 5.3 x 10⁻⁵ | 37.6 | 194 | 0.02 | 8.7 |
| 8 | 3 h 10 | 5.3 x 10⁻⁵ | 35.8 | 207 | 0.09 | 6.6 |
| 9 | 3 h 10 | 5.3 x 10⁻⁵ | 30.2 | 117 | 0.08 | 8.9 |
| 10 | 3 h 10 | 2.8 x 10⁻⁵ | 33.3 | 180 | 0.01 | 9.1 |
| 11 | 3 h 10 | 5.3 x 10⁻⁵ | 36.2 | 170 | 0.01 | 12.2 |
| 12 | 3 h 45 | 5.3 x 10⁻⁵ | 39.8 | 185 | 0.02 | 11.0 |
| 13 | 3 h 10 | 5.3 x 10⁻⁵ | 30.0 | 155 | 0.03 | 12.0 |
| 14 | 1 h | 5.3 x 10⁻⁵ | 23.4 | 221 | 0.02 | 3.0 |

| | | | | | | |
|---|---|---|---|---|---|---|
| ^{a} *D*_{z}: particle size measured by dynamic light scattering (DLS) ^{b} PdI: polydispersity index measured by dynamic light scattering (DLS) | | | | | | |

### Comparative examples

### Preparative example 9: synthesis of a non-reactive PMAA

493 mg of PMAA-CTPPA synthesized in Preparative example 2 was introduced as a dry powder in a two-necked round-bottom flask and dissolved in 10 mL of 2-propanol. After deoxygenation by argon bubbling for 30 min, the flask was immersed in an oil bath thermostated at 80 °C. 14.5 mg of dilauroyl peroxide were added to the orange solution. Then, 14.5 mg of dilauroyl peroxide were introduced every two hours. After 10 h, the mixture was cooled down at room temperature. The obtained yellowish solution was crashed dropwise in cold diethyl ether. A white powder was recovered by filtration and dried over reduced pressure. ¹³C NMR indicates the absence of the signal assigned to the trithiocarbonate moiety. PMAA-CTPPA and the obtained produced were analyzed by SEC in DMSO at the same concentration. The reduction of PMAA-CTPPA has no effect on the molecular weight of the polymer (no variation of the RI signal). After treatment, the strong reduction in intensity of the UV signal at 310 nm due to the absorption of the trithiocarbonate moiety indicates the successful reduction of PMAA-CTPPA and the absence of reactive trithiocarbonate RAFT moiety in the obtained product.

### Examples 16-19: VDF emulsion polymerization in the presence of different stabilizers

Examples 16 and 17 follow the same procedure as Example 2 but using a non-reactive commercial poly(acrylic acid) instead of PAA-CTPPA (same molar quantity) and a reaction time of 1 h 15 and 1 h, respectively.

Example 18 follows the same procedure as Example 3 but using the non-reactive PMAA synthesized in Preparative example 9 instead of PMAA-CTPPA.

Example 19 follows the same procedure as Example 15 but using 3.5x 10⁻⁵ mol of PEG-OH instead of 2.3 × 10⁻⁵ mol of PEG-CTPPA and a reaction time of 2 h 30 instead of 4 h.

The characteristics of these experiments (Examples 16 to 19, see below) are summarized in Table 2. Examples 16 to 19 are compared with Examples 2, 3,14 and 15.

**Table 2 : characteristics of the latex obtained in Ex 16 to 19 and comparison with Ex 2, 3,14 and 15.**

| **Ex** | **Stabilizer** | **Reaction time** | **Mol of stabilizer** | **Solids content (%)** | ***D*_{z} (nm)** | **PdI** | **Nₚ (10¹⁶ L⁻¹_{water})** |
|---|---|---|---|---|---|---|---|
| 2 | PAA-CTPPA | 3 h 10 | 5.3 x 10⁻⁵ | 29.7 | 199 | 0.01 | 5.6 |
| 14 | PAA-X₂ | 1 h | 5.3 x 10⁻⁵ | 23.4 | 221 | 0.02 | 3.0 |
| 16 | PAA | 1 h 15 | 5.3 x 10⁻⁵ | coag^{a} | - | - | - |
| 17 | PAA | 1 h | 5.3 x 10⁻⁵ | 11.5 | 186 | 0.02 | 2.1 |
| 3 | PMAA-CTPPA | 3 h 10 | 2.8 x 10⁻⁵ | 38.0 | 209 | 0.02 | 7.2 |
| 18 | PMAA | 3 h 10 | 2.8 x 10⁻⁵ | 24.0 | 241 | 0.03 | 2.3 |
| 15 | PEG-CTPPA | 4 h | 2.3 x 10⁻⁵ | 18.7 | 89 | 0.04 | 31.5 |
| 19 | PEG-OH | 2h 30 | 3.5x 10⁻⁵ | 20.2 | 220 | 0.02 | 2.4 |

| | | | | | | | |
|---|---|---|---|---|---|---|---|
| ^{a} latex coagulated and not stable when opening the reactor | | | | | | | |

As shown in Table 2, the size of the PVDF particles obtained in the presence of PAA-CTPPA and PAA-X is lower than the one of the particles obtained in the presence of commercial unreactive PAA. Moreover, the size of the particles is also lower in the presence of PMAA-CTPPA compared to the one of those obtained in the presence of unreactive PMAA.

This data shows the much better stabilization offered by the reactive hydrophilic macromolecular RAFT agents compared to both amphiphilic block copolymers based on them or compared to their non-reactive analogues.

## Claims

1. A process for producing a stable vinylidene fluoride polymer latex by emulsion polymerization in the absence of fluorinated surfactant, said process comprising the steps of:
a. providing a hydrophilic macroRAFT by aqueous RAFT (co)polymerization of a hydrophilic compound chosen from: acrylic acid, methacrylic acid, styrene sulfonate and mixtures thereof, forming a first hydrophilic block carrying a reactive chain end,
b. synthesis of a PVDF polymer with vinylidene fluoride (VDF) monomer, alone or in combination with at least one other ethylenically unsaturated comonomer, in the presence of initiator, the hydrophilic macroRAFT synthesized in step a, and optionally of a chain transfer agent and/or an antifoulant.

2. The process of claim 1, wherein the weight ratio initiator/macroRAFT in step b varies from 0.1 to 10, preferably from 0.5 to 6.

3. The process of claim 1, wherein the hydrophilic RAFT agents have the following structure: 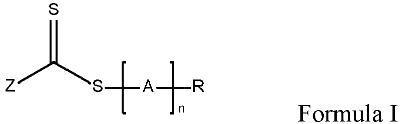 where:
- [A]n- represents a sequence of repeating units -A- derived from at least one ethylenically unsaturated monomer having hydrophilic character [monomer (A)], whereas n is an integer from 2 to 300, preferably from 2 to 200, more preferably from 5 to 120;
- Z is selected from the group consisting of optionally substituted alkoxy, optionally substituted aryloxy, optionally substituted heterocyclyl, optionally substituted alkylthio, optionally substituted arylalkylthio, dialkoxy- or diaryloxy- phosphinyl [-P(=O)(OR⁴)₂], dialkyl- or diaryl- phosphinyl [- P(=O)R⁴₂], where R⁴ is selected from the group consisting of optionally substituted C1-C18 alkyl, optionally substituted C2-C18 alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; and wherein Z may be additionally selected from the group consisting of optionally substituted alkyl, preferably optionally substituted C1-C20 alkyl, optionally substituted aryl, and optionally substituted arylalkyl. Optional substituents for R⁴ and Z groups include epoxy, hydroxy, alkoxy, acyl, acyloxy, carboxy (and its salts), sulfonic acid (and its salts), alkoxy- or aryloxycarbonyl, isocyanato, cyano, silyl, halo, and dialkylamino;
- R is an organic group optionally substituted with one or more hydrophilic groups; group -(H)n - represents at least one polymer chain formed by any mechanism; and Z is selected from the group consisting of optionally substituted alkoxy, optionally substituted aryloxy, optionally substituted heterocyclyl, optionally substituted alkylthio, optionally substituted arylalkylthio, dialkoxy- o diaryloxy- phosphinyl [-P(=O)(OR )2], dialkyl- or diaryl- phosphinyl [-P(=O)R 2], where R4 is selected from the group consisting of optionally substituted C -C alkyl, optionally substituted C2-C18 alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; and wherein Z may be additionally selected from the group consisting of optionally substituted alkyl, preferably optionally substituted C 1-C20 alkyl, optionally substituted aryl, and optionally substituted arylalkyl. Optional substituents for R4 and Z groups include epoxy, hydroxy, alkoxy, acyl, acyloxy, carboxy (and its salts), sulfonic acid (and its salts), alkoxyor aryloxycarbonyl, isocyanato, cyano, silyl, halo, and dialkylamino.

4. The process of any of claims 1 to 3 wherein vinylidene fluoride polymer formed in step b includes both homopolymers of vinylidene fluoride and copolymers containing at least 50 mole percent of vinylidene fluoride copolymerized with at least one ethylenically unsaturated monomer chosen from: tetrafluoroethylene, trifluoroethylene, chlorotrifluoroethylene, hexafluoropropene, vinylfluoride, pentafluoropropene, perfluoromethyl vinyl ether, perfluoropropyl vinyl ether, (meth)acrylic acid and (meth)acrylic esters such as alkyl(meth)acrylates, vinyl esters such as vinyl acetate, vinyl propionate, vinyl butyrate, vinyl benzoate, maleic esters such as dimethyl maleate, diethyl maleate, di-propyl maleate, diisopropyl maleate, di-2- methoxyethyl maleate, fumaric esters such as dimethyl fumarate, diethyl fumarate, di-n-propyl fumarate, diisopropyl fumarate, styrene, vinyltoluene, alpha- methylstyrene, acrylonitrile, anhydrides, vinyl esters, alpha-olefins, substituted or unsubstituted mono and dialkyl esters of unsaturated dicarboxylic acids, vinyl aromatics, and cyclic monomers.

5. The process of any of claims 1 to 4, wherein said initiator is a persulfate salt, chosen from sodium persulfate, potassium persulfate, or ammonium persulfate, the amount of persulfate salt added to the reaction mixture, based upon the total weight of monomer added to the reaction mixture, being from 0.005 to 3.0 weight percent.

6. The process of any of claims 1 to 4 wherein said initiator is an organic peroxide chosen from alkyl, dialkyl, or diacyl peroxide, peroxydicarbonates, and peroxy esters used in an amount from 0.5 to 2.5 weight percent on total weight of monomer added to the reaction mixture.

7. The process of any of claims 1 to 6, wherein said latex particles of vinylidene fluoride polymer have an average particle size comprised between 20 and 500 nm.

8. The process of any of claims 1 to 7 wherein said latex particles of vinylidene fluoride polymer have a solid content of 1 to 60, preferably of 15 to 45 weight percent.

9. An aqueous dispersion obtained by the process of claims 1 to 8, said dispersion comprising particles of vinylidene fluoride polymer, residues of initiator, and a stabilizer from a hydrophilic macroRAFT containing units of acrylic acid, methacrylic acid, styrene sulfonate and mixtures thereof.

10. The aqueous dispersion of claim 9, wherein said particles of vinylidene fluoride polymer have an average particle size from 20 to 500 nm, a solid content of 1 to 60 weight percent, and are free of fluorinated surfactant.

11. Membrane comprising the aqueous dispersion of claim 9 or claim 10.

12. Coating comprising the aqueous dispersion of claim 9 or claim 10.

13. Film comprising the aqueous dispersion of claim 9 or claim 10.
